# EUROPEAN PATENT APPLICATION

(11) **EP 0 926 052 A2**
(43) Date of publication of application: **30.06.1999**
(21) Application number: 98309835.1
(22) Date of filing: 01.12.1998
(51) Int. Cl.: B62J 1/06

(54) **Seat support post**

(30) Priority: 17.12.1997 GB 9726652
(71) Applicant: Hewitt, Paul Raymond, Bideford, North Devon EX39 5JF (GB)
(72) Inventor: Hewitt, Paul Raymond, Bideford, North Devon EX39 5JF (GB)
(74) Representative: Craske, Stephen Allan

(57) **Abstract**

The seat post comprises an outer tube 11, for sliding into a bicycle frame tube, and an inner seat support 19 that is slidably carried in the outer tube on a spring 20. The outer tube has an annular flange in which are formed four screw threaded cavities that communicate with the interior of the outer tube. The four cavities are positioned at 90 degree increments around the tube in a cross formation. Each cavity receives a grub screw, for example 28 and 30, that abuts against the support 19 to minimise lateral and twisting movement of the support whilst still allowing it to slide vertically. Locking grub screws, for example 32 and 34, are also provided to lock the grub screws 28, 30 in position. To further prevent rotation, the support 19 may comprise a non - circular section that slides in a correspondingly shaped part of the outer tube or it may comprise a longitudinal slot which receives a projection from the outer tube. The inner surface of the outer tube may be tapered to accommodate the lateral expansion of the spring under axial compression. A tie rod 23 extends through an axial cavity in the support and the outer tube and is held in place by cirdips, for example 25, that locate in annular grooves. The spring 20 may be replaced with a spring of different rating to accommodate for users of different weight.

## Description

### TECHNICAL FIELD OF THE INVENTION

The invention relates to a seat support post especially for a bicycle.

### BACKGROUND

Conventionally, cycle seats have been mounted on the upper end of a post which is adjustably carried in the rear down-tube of the cycle frame. Unless the rear wheel is connected to the frame via a resilient linkage, the only damping effect for the comfort of the rider depended on the inherent softness or springiness of the saddle itself. More recently, resilient seat supports have been proposed but they typically rely on hydraulic dampers, gas struts and the like.

It is an object of the invention to provide a resilient support post which meets the requirements of most cyclists, having regard to those proposed in the art hitherto.

### SUMMARY OF THE INVENTION

The present invention proposes a seat support post as set forth in the appended claims.

The support member includes means to prevent it from turning or swivelling within the outer tube. The support member may for example include a longitudinal slot or channel which receives a projection extending inwardly from the outer tube to restrain the support member from swivelling but preferably the support member comprises a non-circular part which slides within a correspondingly-shaped part of the outer tube. For example, the support member may be square in cross section in at least part of its length and the bearing means may act against at least two opposed faces of the support member to prevent the support member from turning. Advantageously, the bearing means comprise four screw-threaded adjusters with bearing faces mounted equi-angularly about the support member, each bearing against a respective longitudinal face of the support member. The bearing faces preferably extend across substantially the entire width of the longitudinal faces of the support member.

### BRIEF DESCRIPTION OF THE DRAWINGS

The following description and the accompanying drawings referred to therein are included by way of non-limiting example in order to illustrate how the invention may be put into practice. In the drawings:
Figure 1 is a longitudinal section of a bicycle seat support post in accordance with the invention;
Figure 2 is a section on the line II-II of Figure 1;
Figure 3 is a side elevation of a screw threaded adjuster as used in the support;

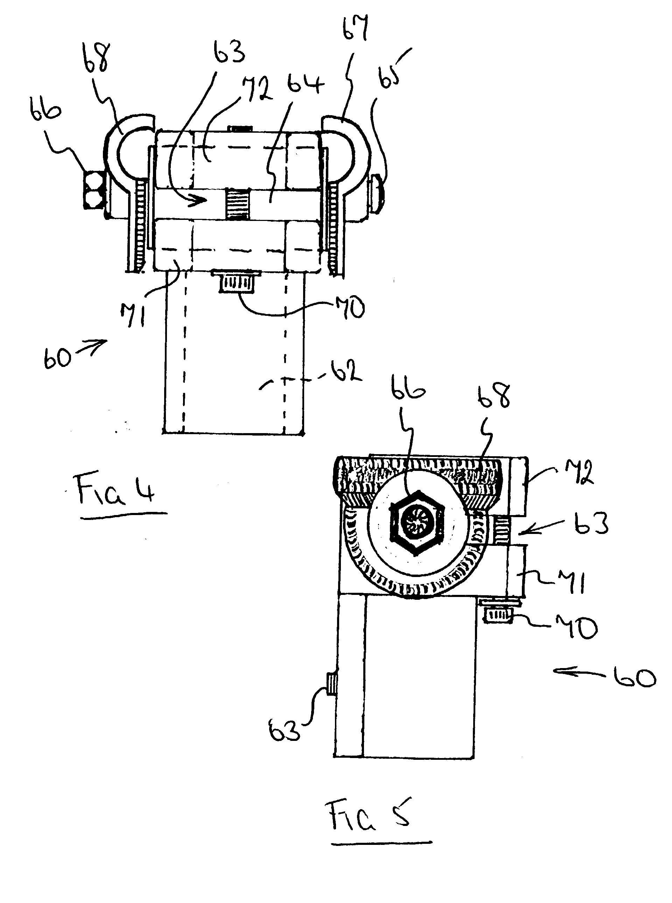

Figure 4 is a front view of a seat-mounting bracket for use with the support post; and
Figure 5 is a side view of the bracket.

### DETAILED DESCRIPTION OF THE DRAWINGS

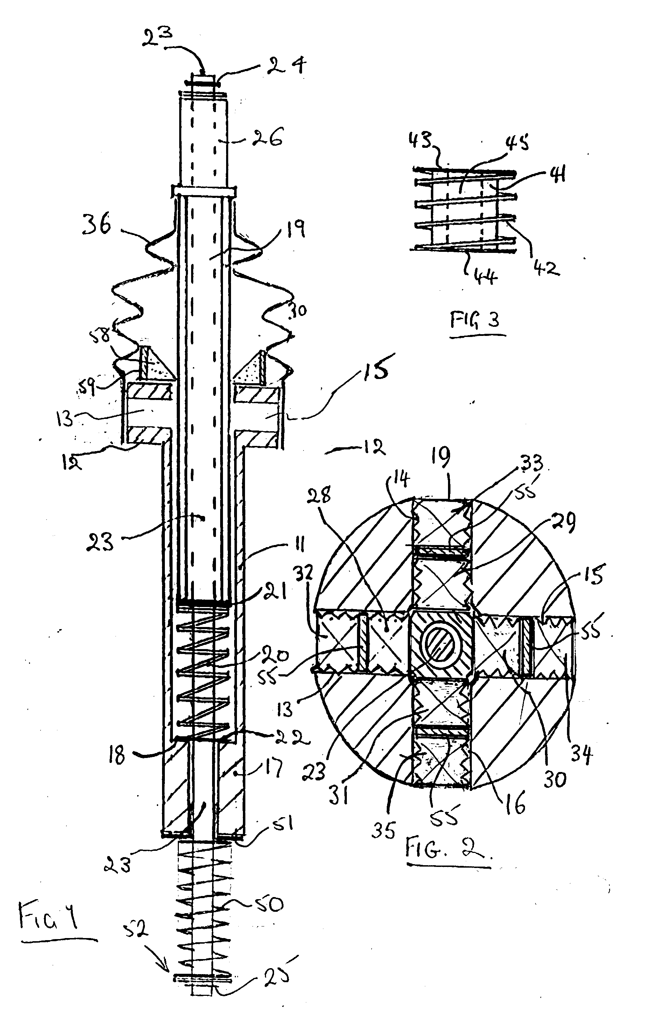

With reference firstly to Figure 1, the support consists essentially of an outer tube member 11 formed with an annular outwardly-extending flange 12 at its upper end in which are formed four radially-disposed cavities 13-16 positioned at respective 90° increments, as shown in Figure 2. The cavities are formed with screw threads.

The lower end of the tube member is formed as a thickened wall portion 17 defining an inner annular shoulder or seating 18. The outer diameter of the tube member may be 25.4mm, sized to be a sliding fit in a cycle frame tube.

An inner seat support shaft 19 of square-section tubing with chamfered edges and a cylindrical axial cavity therethrough is slidably received in the tube member 11. The lower end of the support shaft 19 contacts the upper end of a helical compression spring 20 via a bush or washer 21. The lower end of the spring 20 bears against the shoulder 18 via another bush or washer 22. A tie-rod 23 extends through the outer tube member 11 and the shaft 19. The lower end of the rod 23 projects from the outer member 11 and carries a rebound spring 50 which bears against the lower end of the wall portion 17 via a washer 51. The tie-rod is formed with upper and lower annular grooves which receive cirdips 24, 25 which retain the tie-rod within the support shaft, a further pair of washers 52 being interposed between the lower circlip 25 and the spring 50. The inner wall of the tube member 11 may taper from an inner diameter of 20mm at the upper end to 19mm at the lower end, immediately above the shoulder 18. The slight flare angle accommodates a small amount of lateral expansion of the spring on longitudinal or axial compression thereof without it rubbing or squeaking against the inner wall of the tube. The upper end 26 of the support shaft 19 is formed as a plain cylinder, to engage a mounting bracket for a bicycle seat (see below).

Bearing screws 28-31 are received in the respective cavities 13-16 each abutting a respective face of the support shaft 19, to take up any lateral play and prevent axial twisting movement of the support shaft 19. The screws may be adjusted to a desired pressure against the support shaft 19, for which purpose they may be provided with axial cavities to receive an Allen key or a screwdriver. Locking grub screws 32-35, also provided with axial cavities or end slots for tightening and release purposes, are received in the outer portions of the respective cavities. Resilient discs 55 of an elastomeric friction material are interposed between the locking screws and the bearing screws. These discs or pads apply a spring pressure to the bearing screws ensuring that the screws always press against the shaft 19.

The pads also resist loosening of the locking screws. A grease-receiving cup 58 formed of a foamed plastics material contained within a ring 59 is received about the shaft 19 on top of the flange 12. The cup 58 is periodically filled with grease for lubrication of the shaft 19. An optional cover member such as bellows element 36, made for example from polyurethane, is disposed about the projecting upper end of the support shaft 19 and the flange 12.

One of the screw adjusters 28-35 is shown in Fig. 3. The adjuster includes a cylindrical body 41 having an external screw thread 42 terminating in flat end faces 43, 44 having the same diameter as the outside diameter of the helical ridge which defines the screw thread. The body has an axial cavity 45 of hexagonal section extending therethrough and opening in each end face 43, 44 for receiving a hexagon key for rotational driving thereof. The adjuster is preferably formed from a plastics material, especially an engineering plastics material with self-lubricating properties.

The bracket 60 shown in Fig.s 4 and 5, which reduces wear on the shaft 19, comprises an aluminium body 61 having a vertical aperture 62 for receiving the end 26 of shaft 19 which is secured by a grub screw 63. Above the aperture 62 there is a transverse slotted opening 63 which receives a cylindrical bar 64 such that the axis of the bar 64 intersects or passes very close to the axis of the shaft 19. A bolt 65 passes axially through the bar 53 provided with a nut 66 for clamping a pair of seat-engaging hook plates 67 and 68 having knurled inside faces to opposite ends of the bar 64. When a seat secured to the bar 64 it inclination can be adjusted by rotating the bar 64 within the opening 63, and the bar can then, in turn, be locked by means of a pinch screw 70 which passes through flanges 71 and 72 formed on the body 61 on opposite sides of the slotted opening. The bracket reduces wear on the shaft 19.

In order to change the spring 20 for one having a different rating, it is necessary only to remove the upper circlip or the lower circlip 25 and to slacken the grub screws 28-35 to allow the support member 19 to be withdrawn upwardly, following which the spring may be withdrawn and replaced with a higher or lower rated spring to compensate for more or less body weight.

The use of opposed springs ensures a much smoother ride since upward rebound movements of the seat is buffered as well as downward movements. It will however be apparent that the lower spring could be omitted and the rod 23 shortened accordingly.

It will be appreciated that the features disclosed herein may be present in any feasible combination. Whilst the above description lays emphasis on those areas which, in combination, are believed to be new, protection is claimed for any inventive combination of the features disclosed herein.

## Claims

1. A support post for a cycle seat, comprising a tubular outer member, a spring-loaded support member mounted within the outer member and projecting from an upper end thereof to support a seat in use, and said outer member being provided with a plurality of bearing members mutually spaced at intervals around the support member to slidably guide said support member therein and being adjustably engaged with said outer member to permit adjustment of their bearing contact with the support member.

2. A support post according to Claim 1, in which said bearing members act against substantially flat areas of said support member.

3. A support post according to Claim 2, in which there are four such bearing members acting against two mutually orthogonal pairs of mutually opposed faces of said support member.

4. A support post according to any preceding claim, in which said bearing members have substantially flat bearing surfaces for contact with said support member.

5. A support post according to any preceding claim, in which said bearing members are adjustably engaged in screw-threaded passages in said outer member.

6. A support post according to Claim 5, in which each of said bearing members is held in its adjusted position by a respective locking screw received in an outer portion of the respective passage.

7. A support post according to Claim 6, in which resilient means are interposed between the bearing members and the locking screws.

8. A support post according to Claim 7, in which said bearing members and said locking screws have substantially flat bearing surfaces for contact with said resilient means.

9. A support post according to any preceding claim, in which the support member is spring-loaded in opposite directions.

10. A support post according to any preceding claim, in which the projecting upper end of the support member is provided with a seat-mounting bracket comprising a cylindrical member for connection with the seat and clamping means connected with the support member, the cylindrical member being mounted in the clamping means for rotational adjustment about an axis which, substantially, transversely intersects a central axis of the support member.
